Europäisches Patentamt

(19) European Patent Office

Office européen des brevets

(11) Numéro de publication: **0 227 724**
**B1**

(12) **FASCICULE DE BREVET EUROPEEN**

(45) Date de publication du fascicule du brevet:
**10.01.90**

(21) Numéro de dépôt: **86903436.3**

(22) Date de dépôt: **19.06.86**

(86) Numéro de dépôt international:
**PCT/FR 86/00211**

(87) Numéro de publication internationale:
**WO 86/07629 (31.12.86 Gazette 86/28)**

(51) Int. Cl.⁴: **G 01 G 11/08,** G 01 G 11/12

(54) **APPAREIL POUR LE DOSAGE PONDERAL DE PRODUITS GRANULES OU PULVERULENTS.**

(30) Priorité: **20.06.85 FR 8509406**

(43) Date de publication de la demande:
**08.07.87 Bulletin 87/28**

(45) Mention de la délivrance du brevet:
**10.01.90 Bulletin 90/2**

(84) Etats contractants désignés:
**AT BE CH DE FR GB IT LI LU NL SE**

(56) Documents cités:
**EP-A- 0 139 060**
**CH-A- 358 244**
**FR-A- 787 757**
**FR-A- 1 364 706**
**FR-A- 2 080 239**

(73) Titulaire: **Société Chimique des Charbonnages S.A.,
Tour Aurore Place des Reflets, F-92080 Paris La
Défense 2 Cédex 5 (FR)**

(72) Inventeur: **SICHET, Jean-Luc, 4, rue Florencio Martinez,
F-44800 Saint Harblain (FR)**

(74) Mandataire: **Rieux, Michel, NORSOLOR Service
Propriété Industrielle Tour Aurore 18, Place des Reflets
Cedex no. 5, F-92080 Paris la Défense 2 (FR)**

## Description

La présente invention concerne un appareil perfectionné permettant d'assurer avec exactitude en ligne et en continu, le dosage pondéral ou le mélange en continu de plusieurs produits granulés ou pulvérulents tels que chlorure de potassium, sable, ciment, phosphate, granulés, etc., ce dosage se situant en général au début d'un procédé de fabriation comme par exemple dans l'industrie des engrais, l'industrie des ciments et bétons, l'industrie agroalimentaire, etc.

En général les produits dosés se répartissent sur un tapis collecteur afin d'être traités dans les phases suivantes du procédé.

On connaît déjà des appareils qui permettent d'extraire le produit à doser d'une trémie au moyen d'un dispositif à débit variable, de faire tomber le produit extrait sur une bande sans fin d'un doseur suspendu et pesé de façon constante dans son intégralité, d'entraîner la bande du doseur à une vitesse déterminée correspondant à un débit programmé du doseur, et d'asservir la vitesse de l'appareil d'extraction à la mesure de la charge instantanée de produit réparti sur la bande du doseur.

Dans les appareils actuellement connus on utilise soit des doseurs à extraction séparée, soit des bascules intégratrices et rouleaux peseurs simples ou multiples.

L'étude des critères métrologiques a amené la demanderesse à éliminer les doseurs à bande unique qui présentent de graves inconvénients en ce que:
a) les performances sont altérées par suite de l'encrassement des rouleaux, de la vitesse, de la tension et de la qualité de la bande ainsi que de la charge de la trémie,
b) le tarage est difficile et long puisqu'il nécessite la vidange complète de la trémie,
c) la longueur de pesage du produit sur la bande est mal définie.

Les doseurs à extraction séparée actuellement connus sont constitués par une bande sans fin recevant le produit d'un extracteur placé sous une trémie, l'ensemble de cette bande étant articulé autour d'un axe et suspendu à son autre extrémité à un capteur de poids, un contrepois étant éventuellement situé à l'opposé du capteur afin de réaliser l'équilibre du doseur à vide. Dans d'autres appareils la bande sans fin du doseur est suspendue à un des bras d'une balance, l'autre bras portant des poids.

Ainsi, parmi les doseurs à bande extractrice et doseuses séparées on connaît celui décrit dans le brevet FR-A-787 757 qui concerne un appareil de distribution continue de matières en vrac dans lequel la matière est distribuée par un transporteur suspendu dans un appareil de pesage et dans lequel il est prévu un dispositif d'alimentation actionné par un moteur électrique dont la vitesse est régie en fonction du poids de matière reposant sur le transporteur.

Dans ce dispositif, la bande doseuse est suspendue au fléau d'une balance oscillant autour d'un axe.

Par ailleurs, on connaît également le brevet français 2 080 239 qui concerne un dispositif de régulation de la distribution de particules qui comprend un tapis d'extraction de particules et une bande peseuse reliée à une aiguille indicatrice enregistreuse du poids déclenchant par minuterie une accélération ou un ralentissement du tapis de distribution.

Ces doseurs, quel que soit leur mode de fonctionnement, présentent des inconvénients tels qu'un manque de sensibilité autour de l'axe fixe, et une altération des performances dues à la qualité et au manque d'homogénéité de la bande.

La présente invention concerne un appareil de dosage pondéral en ligne et en continu d'un produit granué ou pulvérulent comportant:
- une trémie de stockage du produit à doser en-dessous de laquelle est agencée une bande continue d'extraction dont le tambour de soutien est susceptible d'être entraîné à vitesse variable par un premier ensemble motoréducteur,
- un ensemble doseur disposé en-dessous et en ligne avec la bande d'extraction pour recevoir le produit extrait par ce dernier, cet ensemble étant constitué: d'un bâti support fixe en forme de té muni à ses extrémités de piliers supportant trois pesons de flexion à jauges de contrainte auxquels est entièrement suspendu par des câbles souples un châssis tubulaire, d'une bande sans fin dont les tambours sont supportés par le châssis tubulaire ultra-léger et dont l'un des tambours est susceptible d'être entraîné à vitesse variable par un deuxième motoréducteur,
- une chaîne régulation électronique qui est telle que la vitesse d'entraînement de la bande d'extraction est asservie à la mesure de la charge instantanée de la bande du doseur.

Cet appareil offre d'importants avantages parmi lesquels on peut citer:
- la possibilité d'optimiser au mieux l'appareil d'extraction en fonction du produit dosé,
- une meilleure précision, surtout à faible débit, pouvant atteindre +0,2% du débit affiché,
- une plage de variation du débit pouvant aller de 5 à 100% du débit nominal,
- une grande facilité d'exploitation et de réglage,
- le fait que la tension et la qualité de la bande utilisée n'ont pas d'importance,
- une accessibilité parfaite pour le nettoyage et l'entretien,
- un détarage très faible.

D'autres caractéristiques, avantages et particularités de la présente invention ressortiront de la description qui en est donnée ci-après en référence aux dessins annexés représentant, schématiquement et simplement, à titre d'exemple préférentiel, une forme de réalisation possible de l'invention.

Sur ces dessins:
- la figure 1 est un schéma représentant en élévation un ensemble de dosage en continu,
- les figures 2 et 3 sont des vues de détail à plus grande échelle représentant, respectivement en élévation et en plan, le doseur proprement dit; et
- la figure 4 est un schéma de principe de régulation et de fonctionnement de l'ensemble de dosage pondéral en continu mettant en oeuvre le procédé selon l'invention.

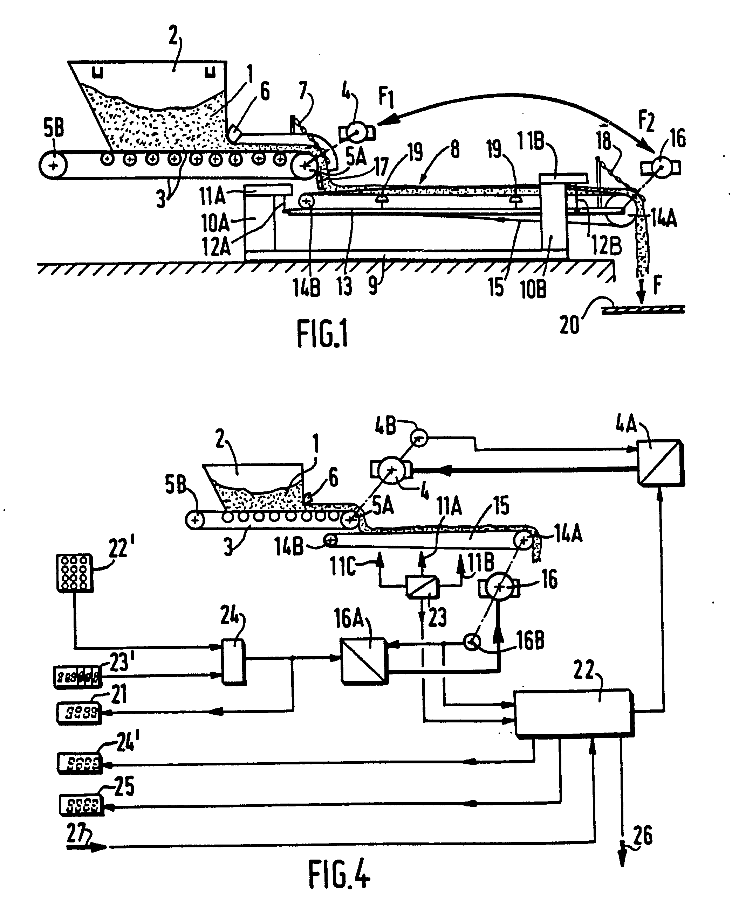

En se référant tout d'abord à la figure 1, on voit que conformément à l'invention le produit à doser (1) est stocké dans une trémie (2) en-dessous de laquelle est agencé un extracteur à bande sans fin (3). Cette bande est supportée par des tambours d'entraînement et de renvoi (5A, 5B) et entraînée à vitesse variable par un ensemble motoréducteur à courant continu à bobinage lamellaire et muni d'une pris de vitesse (désigné par la référence générale 4) qui attaque le tambour d'entraînement antérieur (5A) de la bande extractrice.

En bout de l'extracteur est agencé un casque (6) à commande manuelle ou automatique, destiné à régler la hauteur de la couche du produit (1) extrait de la trémie (2) par la bande (3).

Un série de chaînes (7) est disposée transversalement à la bande (3), juste avant la chute du produit. Ces chaînes constituant une sorte de rideau transversal ont pour but de régulariser le débit et de fractionner le produit afin de réduire l'effet de chute sur l'ensemble doseur proprement dit (désigné par la référence générale 8) qui est disposé sous et en ligne avec la bande extractrice (3).

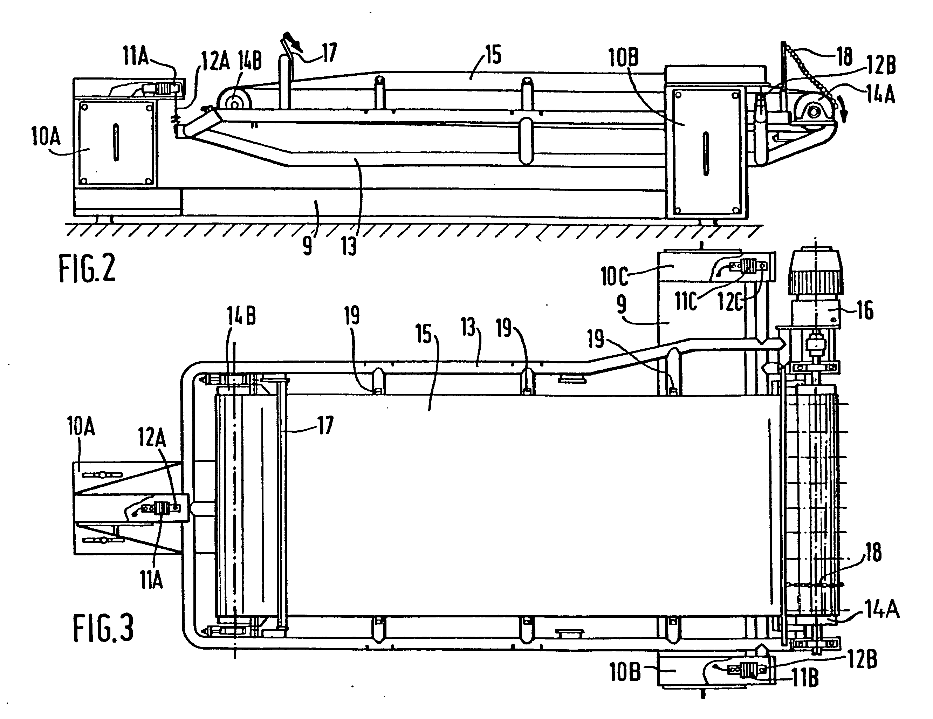

Cet ensemble doseur (8) (voir également figures 2 et 3) est constitué d'un bâti support fixe en forme de té (9), muni à ses extrémités de trois piliers (10A, 10B, 10C) supportant trois pesons de flexion à jauges de contrainte (11A, 11B, 11C) qui sont munis de câbles de suspension souples (12A, 12B, 12C) auxquels est accroché un châssis tubulaire extra-léger (13).

Ce châssis tubulaire suspendu sert de support aux tambours d'entraînement et de renvoi (14A, 14B), d'une bande sans fin formant tapis-doseur (15) qui est entraînée à vitesse variable par un ensemble motoréducteur à courant continu, à bobinage lamellaire et muni d'une prise de vitesse, désigné par la référence (16).

Pour que la longueur de pesage soit délimitée de façon précise, une table de jetée (17) est agencée à la partie arrière du châssis tubulaire (13) qui se trouve sous la bande extractrice (3) afin de recevoir le produit (1) rejeté par cette dernière tandis qu'un rideau transversal de chaînes (18) est monté à la sortie de la bande (15) du doseur et a pour rôle de fractionner le produit toujours au même endroit et de le rejeter suivant la flèche (F) vers un tapis collecteur (20) pour la suite du traitement du produit.

Par ailleurs, la bande (15) du doseur glisse sur une série d'auges porteuses autoglissantes (19) inclinées vers le haut, qui relèvent les bords de la bande (15) du doseur tout au long de la partie ou s'effectue le pesage.

On voit que la bande (15) du doseur qui reçoit le produit (1) (de la bande extractrice (3)), transporte ce produit jusqu'à la sortie tout en assurant la pesée intégrale instantanée de façon constante, par le système à pesons (11A, 11B, 11C) et ce sur une longueur bien précise.

La bande (15) du doseur est entraînée par son moteur (16) à une vitesse déterminée correspondant à un débit programmé donné de l'ensemble doseur (8).

La vitesse à laquelle est entraînée la bande extractrice (3) par son moteur (4) est asservie à la mesure instantanée de la charge de produit, au moyen d'une chaîne de régulation schématisée par la flèche double (F1-F2) sur la figure 1, ceci de façon que, si la mesure de la charge instantanée de produit réparti sur la bande (15) du doseur ne correspond pas à la consigne propre de l'ensemble doseur (8), la vitesse de la bande extractrice (3) se trouve automatiquement corrigée en plus ou en moins pour maintenir la charge de produit constante et ce, quel que soit le débit programmé du doseur.

En se référant maintenant plus particulièrement à la figure 4, on va décrire de façon très succincte comment peut être, par exemple, réalisée la chaîne de régulation (F1-F2) pour asservir la vitesse de la bande extractrice (3) à la mesure instantanée de la charge sur la bande (15) du doseur et corrigée pour que la charge du produit sur la bande du doseur reste constante et ce, quel que soit le débit programmé du doseur.

La partie électrique est, à cet effet, constituée de trois chaînes de régulation bouclées et asservies entre elles et de deux calculateurs numériques avec leurs auxiliaires.

L'ensemble de régulation comprend:
a) une boucle de régulation de la vitesse et de la bande (15) du doseur,
b) une boucle de régulation du poids, et
c) une boucle de régulation de la vitesse de la bande extractrice.

La première boucle a) permet de réguler (avec une précision de + 1/1000) la vitesse linéaire de la bande (15) du doseur en fonction de la consigne de débit programmé, propre au doseur.

Cette consigne de débit programmé propre au doseur est visualisée en clair en t/h sur un indicateur numérique (21) et est le résultat d'un calcul élaboré à partir de deux signaux, à savoir:
1. le signal de consigne générale de l'ensemble des doseurs d'une installation, ce signal numérique exprimé en t/h étant élaboré à partir d'un clavier à touches (22'),
2. le signal qui provient du doseur dont il s'agit, qui est une proportion, et constitue la consigne propre de ce dernier exprimé en kg/t du produit fini, ce signal étant élaboré à partir de roues codeuses et affiché sur un afficheur (23').

Les deux signaux ci-dessous sont appliqués aux entrées d'un premier calculateur numérique (24) qui réalise l'opération:
(consigne générale en t/h) × (proportion correspondant au doseur en kg/t) = consigne de débit programmé en kg/h.

A titre d'exemple numérique, on peut mentionner que l'ensemble de dosage exemplifié a notamment été utilisé avec une consigne générale de 32 t/h et une cosigne propre au doseur de 110 kg/t, ce qui correspond à une consigne de débit programmé de 3520 kg/h.

Cette consigne de débit programmé est, d'une part, visualisée sur l'indicateur numérique (21), d'autre parte, commande le variateur de vitesse (16A), l'ensemble motoréducteur (16) du doseur.

Le régulateur de ce variateur maintient en permanence la stabilité en vitesse du moteur (16) d'entraînement du manchon (14A) du doseur (15) en comparant la consigne de d'ébit programmé (21) à la mesure réelle de la vitesse fournie par le capteur de vitesse (16B) monté dans l'ensemble motoréducteur.

La deuxième boucle de régulation du poids b) permet de réguler et de maintenir avec précision une charge constante de produit sur le doseur, et ceci quel que soit le débit programmé, c'est-à-dire quelle que soit la vitesse de la bande du doseur.

A cet effet est prévu un régulateur de poids (22), lequel possède une consigne interne pré-programmée.

Par ailleurs, la mesure réelle instantanée du poids sur le doseur provenant du signal des trois jauges de contrainte (11A, 11B, 11C) montées en parallèle est amplifiée et filtrée par l'intermédiaire d'un transmetteur de poids (23), est appliquée au régulateur de poids (22) à consigne préprogrammée.

Lorsque l'écart entre cette consigne et la mesure réelle instantanée du poids sur le doseur provenant du transmetteur de poids (23) n'est pas nul, le régulateur délivre un signal de correction positif ou négatif au variateur de vitesse (4A) de l'ensemble motoréducteur (4) d'entraînement du tambour (5A) de la bande extractrice (3), ce qui a pour effet d'augmenter ou de diminuer l'arrivée du produit sur le doseur afin d'annuler l'écart de poids constaté.

Il est important de noter que lorsque le doseur est vide, au démarrage, le signal de sortie de ce régulateur est masqué par celui d'un générateur de rampe, qui a pour effet de charger progressivement et uniformément le doseur et, lorsque le poids sur le doseur correspond à la consigne interne pré-programmée, le régulateur reprend le relais et maintient le poids constant sur le doseur.

La troisième boucle de régulation de la vitesse de la bande d'extraction c) permet de réguler avec précision la vitesse linéaire de la bande de l'extracteur en fonction du signal de correction donné par le régulateur de poids (22).

A cet effet, le régulateur de poids (22), délivre en sortie des échelons de consigne correctifs positifs ou négatifs, qui sont au préalable mixés au signal de consigne du débit programmé du doseur de la première boucle a). Le signal issu de ce mixage précité sert de consigne au variateur (4A) de la vitesse du moteur (4) de la bande extractrice (3).

Le régulateur de ce variateur ajuste donc en permanence la vitesse du moteur extracteur en comportant cette consigne de correction à la mesure réelle de la vitesse fournie par le capteur de vitesse (4B) monté dans l'ensemble motoréducteur.

Un deuxième calculateur intégré au régulateur de poids (22) a pour but de réaliser la fonction suivante: (Débit réel instantané) = (Poids réel instantané sur le doseur) × (Vitesse réelle instantanée de la vitesse de la bande du doseur).

A cet effet, l'information poids provient du transmetteur de poids (23) at attaque l'une des entrées du calculateur, tandis que l'information vitesse, provenant du capteur de vitesse (16B) monté dans l'ensemble motoréducteur d'entraînement de la bande (15) du doseur, arrive sous forme numérique codée et attaque l'autre entrée du calculateur.

Le résultat de ce calcul de débit réel instantané est directement visualisé en clair sur un indicateur numériqe (24').

L'exploitation a donc la possibilité de contrôler d'un seul coup d'oeil le bon fonctionnement du doseur en comparant l'affichage des deux utilisateurs: consigne débit (21) et débit réel instantané (24'), affichage qui doit être identique en fonctionnement normal.

Ce calculateur (22) permet également d'assurer, au moyen de deux circuits électroniques, le comptage et la gestion des alarmes.

Pour le comptage, le signal linéaire débit réel instantané de sortie est converti en un signal impulsionnel proportionnel permettant de sortir un signal adapté aux besoins, c'est-à-dire une impulsion par unité de produit traité, comme par exemple une impulsion pour 100 g ou impulsion pour 1 kg, etc.

Ce signal adapté est ensuite comptabilisé et mémorisé sur un compteur numérique (25) permettant de connaître la quantité de produit passé.

Pour la gestion des alarmes, le signal débit réel instantané est comparé au signal de consigne de débit (21) du doseur. Le comparateur possède deux seuils d'alarme réglables, par exemple à +2%, si le signal franchit l'un de ces deux seuils, un circuit de gestion (26) enclenche, au bout d'un temps donné, un relais d'alarme lumineux et/ou sonore, et au bout d'un temps supérieur donné et un autre relais de commande de coupure de la consigne générale de l'atelier de dosage.

Des ordres convenables peuvent être appliqués au calculateur (22), en (27).

Il va de soi que la présente invention n'a été décrite et représentée qu'à titre d'exemple préférentiel et qu'on pourra y apporter des équivalences techniques dans ses éléments constitutifs sans pour autant sortir de son cadre comme revendiqué.

## Revendications

1. Appareil de dosage pondéral en ligne et en continu d'un produit granulé ou pulvérulent comportant
- une trémie de stockage (2) du produit à doser (1) en-dessous de laquelle est agencée une bande continue d'extraction (3) dont l'un des tambours de soutien (5A, 5B) est susceptible d'être entraîné à vitesse variable par un premier ensemble motoréducteur (4),
- un ensemble doseur (8) disposé en-dessous et en ligne avec la bande d'extraction (3) pour recevoir le produit extrait par cette derniere, cet ensemble étant constitué: d'un bâti support fixe en forme de té (9) muni à ses extrémités de piliers (10A, 10B, 10C) supportant trois pesons de flexion à jauges de contrainte (11A, 11B, 11C) auxquels est entièrement suspendu par des câbles souples (12A, 12b, 12C), un châssis tubulaire extra léger (13), d'une bande sans fin (15) dont les tambours (14A, 14B) sont supportés par le châssis (13) et dont l'un des tambours (14A) est susceptible d'être entraîné à vitesse variable par un deuxième ensemble motoréducteur (16).
- une chaîne de régulation électronique qui est telle que la vitesse d'entraînement de la bande d'extraction est asservie à la mesure de la charge instantanée de la bande (15) du doseur.

2. Appareil selon la revendication 1, caractérisé en ce que des rideaux transversaux de chaînes (7-18) sont agencés, juste avant la chute du produit de manière à régulariser le débit du produit tant sur l'appareil d'extraction (3) que sur le doseur (8), à fractionner le produit et à réduire l'effet de chute à la sortie sur l'appareil d'extraction (3) et le doseur (8).

3. Appareil selon l'une quelconques des revendications 1 ou 2, caractérisé en ce que les ensembles motoréducteur (4, 16) de l'appareil d'extraction (3) et du doseur (8) sont des ensembles à courant continu à bobinage lamellaire et muni d'une prise de vitesse.

4. Appareil selon la revendication 1, caractérisé en ce que l'asservissement de la vitesse de l'appareil (3) à la mesure instantanée de la charge de produit réparti sur la bande du doseur (8), est constitué de trois chaînes de régulation bouclées et asservies entre elles et de deux calculateurs numériques avec leurs auxiliaires: une première boucle permettant de réguler la vitesse linéaire de la bande doseuse (15) en fonction de la consigne de débit programmé propre au doseur (8) qui comprend un calculateur (24) dont le signal de sortie commande le variateur de vitesse (16A) de l'ensemble motoréducteur (16) du doseur, le régulateur de ce variateur maintenant en permanence la stabilité en vitesse du moteur (16) en comparant la consigne de débit programmé (21) à la mesure réelle de la vitesse fournie par le capteur de vitesse (16B) monté dans l'ensemble motoréducteur (16); une deuxième boucle permettant de réguler et de maintenir avec précision une charge constante de produit sur le doseur et ce, quel que soit le débit programmé qui comprend un régulateur de poids (22) possédant une consigne interne pré-programmée de poids et auquel est appliquée la mesure réelle instantanée du poids sur le doseur fournie par un transmetteur de poids (23) recevant les signaux des jauges de contrainte (11A - 11B - 11C), le régulateur de poids (22) délivrant en fonction de l'écart entre la consigne pré-programmée et la mesure réelle instantanée, un signal de correction positif ou négatif au variateur de vitesse (4A) de l'ensemble motoréducteur (4) de l'appareil d'extraction (3); une troisième boucle permettant de réguler avec précision la vitesse linéaire de l'appareil d'extraction (3) en fonction du signal de correction fourni par le régulateur de poids (22), qui est mixé au signal de consigne du débit programmé du doseur de la première boucle, et appliqué comme consigne de correction au variateur (4A) de l'ensemble motoréducteur (4) de l'appareil d'extraction (3), le régulateur de ce variateur ajustant en permanence la stabilité en vitesse du moteur (4) en comparant la consigne de correction à la mesure réelle de la vitesse fournie par le capteur de vitesse (4B) monté dans l'ensemble motoréducteur (4).

5. Appareil selon la revendication 4, caractérisé en ce que lorsque le doseur se trouve vide, au démarrage, le signal de sortie du régulateur de poids (22) est masqué par celui d'un générateur de rampe qui a pour effet de charger progressivement et uniformément la bande (15) du doseur et, lorsque le poids sur la bande (15) du doseur correspond à la consigne interne pré-programmée (22), ce dernier reprend le relais et maintient le poids constant sur la bande (15) du doseur.

6. Appareil selon la revendication 5, caractérisé en ce qu'un deuxième calculateur a pour but de réaliser la fonction:

(Débit réel momentané) = (Poids réel instantané sur la bande du doseur) × (Vitesse réelle instantanée de la vitesse de la bande du doseur), l'information poids povenant du transmetteur de poids (23) attaquant l'une des entrées du calculateur, tandis que l'information vitesse, provenant du capteur de vitesse (16B) monté dans l'ensemble motoréducteur de la bande (15) du doseur arrivant sous forme numérique codée et attaquant l'autre entrée du calculateur, grâce à quoi le résultat de ce débit réel instantané est directement visualisé en clair sur un indicateur numérique (24) qui comparé avec la consigne de débit (21) du doseur permet de vérifier le fonctionnement normal de l'ensemble doseur (8).

7. Appareil selon la revendication 6, caractérisé en ce que le signal de sortie débit réel instantané du deuxième calculateur est exploité par deux circuits électroniques, dans le premier qui est utilisé pour le comptage, le signal linéaire du débit réel instantané est converti en un signal impulsionnel proportionnel, une impulsion par unité de produit dosé, est comptabilisé et memorisé sur un compteur numérique (25) permettant de connaître la quantité de produit passé; dans la deuxième qui est utilisé pour la gestion des alarmes, le signal débit réel instantané est comparé au signal de consigne du débit (21) du doseur, dans un comparateur possédant deux seuils d'alarme réglables, et si l'un de ces seuils est franchi, un circuit de gestion des alarmes (26) déclenche, au bout d'un donné un relais d'alarme lumineux et/ou sonore, et au bout d'un temps supérieur prédéterminé, un autre relais de commande d'arrêt général de l'atelier de dosage.

## Patentansprüche

1. Vorrichtung zur rechnerabhängigen und kontinuierlichen Gewichtsdosierung eines körnigen oder pulverförmigen Produkts mit,
- einem Vorratsbunker (2) für das zu dosierende Produkt (1), unterhalb welchem ein endloses Abzugsband (3) angeordnet ist, von dem eine der Stütztrommel (5A, 5B) durch einen ersten Getriebemotor (4) mit veränderlicher Geschwindigkeit antreibbar ist,
- einer Dosiereranordnung (8), die unterhalb des Abzugsbandes (3) und in einer Linie mit demselben angeordnet ist, um das von dem Abzugsband abgezogene Produkt aufzunehmen, wobei diese Anordnung gebildet ist: von einem festen Tragelement (9) in T-form, das an seinen Enden mit Pfeilern (10A, 10B, 10C) versehen ist, die drei Biegekraftwaagen (11A, 11B, 11C) mit Dehnungsmeßstreifen tragen, an welche Waagen mittels biegsamer Seile (12A, 12B, 12C) ein extra leichter Rohrrahmen (13) für ein endloses Band (15) vollständig aufgehängt ist, wobei die Trommeln (14A, 14B) des Bandes von dem Rahmen (13) getragen werden und eine (14A) der Trommel von einem zweiten Getriebemotor (16) mit veränderlicher Geschwindigkeit antreibbar ist,
- einer elektronischen Regelkette, die derart ist, daß die Antriebsgeschwindigkeit des Abzugsbandes je nach der momentanen Beladung des Bandes (15) des Dosierers geregelt wird.

2. Vorrichtung nach Anspruch 1, dadurch gekennzeichnet, daß schräg verlaufende Kettenvorhänge (7-18) genau vor dem Produktfall angeordnet sind, so daß der Produktaustrag sowohl an der Abzugseinrichtung (3) als auch am Dosierer (8) reguliert wird, das Produkt zerkleinert wird und die Fallwirkung am Ausgang der Abzugseinrichtung (3) und des Dosierers (8) verringert wird.

3. Vorrichtung nach Anspruch 1 oder 2, dadurch gekennzeichnet, daß die Getriebemotoren (4, 16) der Abzugseinrichtung (3) und des Dosierers (8) Gleichstrom-Getriebemotoren mit Lamellenwicklung sind und mit einem Geschwindigkeitsabgriff versehen sind.

4. Vorrichtung nach Anspruch 1, dadurch gekennzeichnet, daß die Regelung der Geschwindigkeit der Einrichtung (3) je nach der momentanen Größe der Ladung des auf dem Band des Dosierers (8) verteilten Produkts gebildet ist von drei zur Schleife geschalteten und untereinander getriggerten Regelketten und zwei numerischen Rechnern mit ihren Hilfsmitteln: eine erste Schleife, die erlaubt, die Lineargeschwindigkeit des Dosierbandes (15) in Abhängigkeit des dem Dosierer (8) zugeordneten programmierten Austragwertes zu regeln, und einen Rechner (24) enthält, dessen Ausgangssignal den Regelantrieb (16A) des Getriebemotors (16) des Dosierers steuert, wobei der Regler dieses Regelantriebes die Stabilität der Geschwindigkeit des Motors (16) permanent aufrechterhält, indem er den programmierten Austragswert (21) mit dem tatsächlichen Geschwindigkeitswert vergleicht, der von dem in Getriebemotor (16) montierten Geschwindigkeitsfühler (16B) geliefert wird, eine zweite Schleife, die erlaubt, eine konstante Produktladung auf dem Dosierer zu einzuregeln und genau aufrechtzuerhalten, und dies bei jeder beliebigen programmierten Ladung, welche Schleife einen Gewichtsregler (22) enthält, der einen vorprogrammierten internen Gewichtswert besitzt und an den der momentane tatsächliche Wert des Gewichts auf dem Dosierer angelegt ist, welcher Wert von einem Gewicht-Meßwertgeber (23) geliefert wird, der die Signale der Druckmeßstreifen (11A - 11B - 11C) empfängt, wobei der Gewichtsregler (22) in Abhängigkeit von der Differenz zwischen dem vorprogrammierten Wert und dem momentanen tatsächlichen Wert ein positives oder negatives Korrektursignal an den Regelantrieb (4A) des Getriebemotors (4) der Abzugseinrichtung (3) liefert; eine dritte Schleife, die erlaubt, die Lineargeschwindigkeit der Abzugseinrichtung (3) in Abhängigkeit des Korrektursignals genau zu regeln, das von Gewichtsregler (22) geliefert und dem Signal des programmierten Ladungswertes des Dosierers aus der ersten Schleife zugemischt wird und als Korrekturwert an den Regelantrieb (4A) des Getriebemotors (4) der Abzugseinrichtung (3) angelegt wird, wobei der Regler dieses Regelantriebes die Stabilität der Geschwindigkeit des Motors (4) permanent einregelt, indem er den Korrekturwert mit dem von dem in der Getriebemotoranordnung (4) montierten Geschwindigkeitsfühler (4B) gelieferten tatsächlichen Geschwindigkeitswert vergleicht.

5. Vorrichtung nach Anspruch 4, dadurch gekennzeichnet, daß, wenn beim Anlauf der Dosierer leer ist, das Ausgangssignal des Gewichtsreglers (22) von dem eines Rampengenerators verdeckt wird, was bewirkt, daß das Band (15) des Dosierers allmählich und gleichmäßig beladen wird, und daß, wenn das Gewicht auf dem Band (15) des Dosierers dem internen vorprogrammierten Wert (22) entspricht, letzterer die Aufgabe übernimmt und das Gewicht auf dem Band (15) des Dosierers konstant hält.

6. Vorrichtung nach Anspruch 5, dadurch gekennzeichnet, daß ein zweiter Rechner zur Aufgabe hat, die Funktion zu erfüllen: (tatsächlicher momentaner Austrag) = (tatsächliches momentanes Gewicht auf dem Band des Dosierers) × (tatsächliche momentane Geschwindigkeit des Bandes des Dosierers), wobei die Gewichtsinformation von dem einen der Eingänge des Rechners speisenden Gewichts-Meßwertgeber (23) kommt, während die Geschwindigkeitsinformation, die von dem in dem Getriebemotor des Bandes (15) des Dosierers montierten Geschwindigkeitsfühler (16B) herrührt, in codierter numerischer Form ankommt und den anderen Eingang des Rechners beaufschlagt, auf Grund dessen das Resultat dieses tatsächlichen momentanen Austrags auf einer numerischen Anzeige (24) direkt in Klarschrift sichtbar gemacht wird und verglichen mit dem Austragswert (21) des Dosierers erlaubt, den richtigen Betrieb der Dosiereranordnung (8) zu überprüfen.

7. Vorrichtung nach Anspruch 6, dadurch gekennzeichnet, daß das den tatsächlichen momentanen Austrag repräsentierende Ausgangssignal des zweiten Rechners von zwei elektronischen Schaltungen ausgewertet wird, wobei in der ersten, die zum Zählen verwendet wird, das lineare Signal des tatsächlichen momentanen Austrags in ein proportionales Impulssignal umgewandelt wird — ein Impuls pro Einheit des dosierten Produkts — und in einem numerischen Zähler (25) erfaßt und gespeichert wird, der erlaubt, Kenntnis von der Menge des durchgegangenen Produkts zu haben, und wobei in der zweiten, die zur Alarmsteuerung verwendet wird, das Signal des tatsächlichen momentanen Austrags mit dem Signal des Austragswerts (21) des Dosierers in einem zwei einstellbare Alarmschwellen aufweisenden Komparator verglichen wird und bei Überschreitung einer dieser Schwellen ein Alarmsteuerkreis (26) am Ende einer gegebenen Zeitspanne ein Leucht- und/oder Schall-Alarm-Relais auslöst und am Ende einer vorbestimmten längeren Zeitspanne ein weiteres Relais zur Abgabe eines Befehls zur generellen Stillsetzung das Dosierbetriebes.

## Claims

1. Apparatus for the in-line continuous weight feeding of a granulated or pulverulent product incorporating
- a hopper (2) storing the product (1) to be dispensed and beneath which is disposed a continuous extraction belt (3), one of whose support drums (5A, 5B) is adapted to be driven at variable speed by a first motor-reduction gear unit (4);
- a dispenser unit (8) disposed under and in line with the extraction belt (3) for the purpose of receiving the product extracted by the latter, said unit being composed of: a fixed T-shaped support frame (9) provided at its ends with pillars (10A, 10B, 10C) supporting three strain gauge type flexion weight indicators (11A, 11B, 11C) to which an ultralight tubular frame (13) is completely suspended by means of flexible cables (12A, 12B, 12C), a rotating belt (15) whose drums (14A, 14B) are supported by the frame (13), one of the drums (14A) being adapted to be driven at variable speed by a second motor-reduction gear unit (16);
- an electronic control chain which is such that the driving speed of the extraction belt is controlled in dependence on the instantaneous load of the dispenser belt (15).

2. Apparatus according to Claim 1, characterized in that transverse curtains of chains (7-18) are disposed just upstream of the point where the product is dropped, for the purpose of regularizing the delivery of the product both onto the extraction apparatus (3) and onto the dispenser (8), fractionating the product and reducing the effect of the drop at the outlet on the extraction apparatus (3) and the dispenser (8).

3. Apparatus according to either of Claims 1 or 2, characterized in that the motor-reduction gear units (4, 16) of the extraction apparatus (3) and of the dispenser (8) are direct-current laminated-winding units provided with a speed takeoff.

4. Apparatus according to Claim 1, characterized in that the system controlling the speed of the apparatus (3) in dependence on the instantaneous measurement of the load of product distribution on the belt of the dispenser (8) is composed of three looped interdependent control chains and two digital computers with their ancillary equipment; a first loop permitting control of the linear speed of the dispenser belt (15) in dependence on the individual programmed delivery set point of the dispenser (8) and containing a computer (24) whose output signal controls the speed variator (16A) of the motor-reduction gear unit (16) of the dispenser, the controller of this variator permanently maintaining the speed stability of the motor (16) by comparing the programmed delivery set point (21) with the actual measurement of speed supplied by the speed transducer (16B) installed in the motor-reduction gear unit (16); a second loop making it possible to control and accurately maintain a constant load of product on the dispenser whatever the programmed delivery, this loop containing a weight controller (22) having a preprogrammed internal weight set point and receiving the actual instantaneous measurement of the weight on the dispenser from a weight trasmitter (23) receiving the signals from the strain gauges (11A - 11B - 11C), the weight controller (22) supplying, in dependence on the difference between the preprogrammed set point and the actual instantaneous measurement, a positive or negative correction signal to the speed variator (4A) of the motor-reduction gear unit (4) of the extraction apparatus (3); a third loop making it possible to control accurately the linear speed of the extraction apparatus (3) in dependence on the correction signal supplied by the weight controller (22), which signal is mixed with the programmed delivery set point signal of the dispenser in the first loop and is fed as correction set point to the variator (4A) of the motor-reduction gear unit (4) of the extraction apparatus (3), the controller of this variator permanently adjusting the speed stability of the motor (4) by comparing the correction set point with the actual speed measurement supplied by the speed transducer (4B) installed in the motor-reduction gear unit (4).

5. Apparatus according to Claim 4, characterized in that when the dispenser is empty, on starting up, the output signal of the weight controller (22) is masked by the signal of a ramp generator which has the effect of gradually and uniformly loading the dispenser belt (15), and that when the weight on the dispenser belt (15) corresponds to the internal preprogrammed set point (22), the latter takes over and maintains a constant weight on the dispenser belt (15).

6. Apparatus according to Claim 5, characterized in that a second computer serves the purpose of making the calculation:
(actual instantaneous delivery) = (actual instantaneous weight on the dispenser belt) × (actual instantaneous speed of the dispenser belt), the weight information comung from the weight transmitter (23) being fed to one of the inputs of the computer, while the speed information coming from the speed transducer (16B) installed in the motor-reduction gear unit of the dispenser belt (15) arrives in coded digital form and is fed to the other input of the computer, as the consequence of which the result of this actual instantaneous delivery is directly displayed in clear on a digital display (24) and, when compared with the delivery set point (21) of the dispenser, makes it possible to check that the dispenser unit (8) is working normally.

7. Apparatus according to Claim 6, characterized in that the actual instantaneous delivery output signal of the second computer is processed by two electronical circuits, in the first, which is used for counting, the linear actual instantaneous delivery signal is converted into a proportional pulse signal, one pulse per unit of product dispensed, and is counted and stored in a digital counter (25) making it possible to ascertain the amount of product passed; in the second, which is used for control of alarms, the actual instantaneous delivery signal is compared with the delivery set point (21) signal of the dispenser in a comparator having two adjustable alarm thresholds, and if one of these thresholds is passed an alarm control circuit (26) will, at the end of a given period of time, operate a light and/or acoustic alarm relay and, at the end of a predetermined longer period of time, another relay controlling the general stopping of the dispensing plant.

FIG.1

FIG.4

FIG.2

FIG.3

EP 0 227 724 B1